# DEMANDE DE BREVET EUROPEEN

(11) **EP 0 909 678 A1**
(43) Date de publication de la demande: **21.04.1999**
(21) Numéro de dépôt: 97118041.9
(22) Date de dépôt: 17.10.1997
(51) Int. Cl.: B60P 3/36, B60S 9/18

(54) **Dispositif de manoeuvre pour déplacer une caravane**

(71) Demandeur: Perret, Jean, 47230 Lavardac (FR)
(72) Inventeur: Perret, Jean, 47230 Lavardac (FR)

(57) **Abrégé**

Dispositif de manoeuvre et d'entraînement pour déplacer une caravane, comprenant un boîtier (2) positionné sur l'axe d'une roue (1) du timon, lequel boîtier est porté par un support vertical (3) et renferme un système de démultiplication, lequel système est actionné au moyen d'une commande latérale (10) dont l'extrémité inférieure entraîne un tube de section carrée qui est logé dans un tube guide (4) fixé sur la paroi latérale du boîtier (2). La partie inférieure de la commande est formée d'une tige de section carrée qui porte une bague fixe, laquelle partie est verrouillée dans le tube guide avec une pièce (22) tampon, cette dernière se prolonge par un pièce carrée (24) qui possède un évidement dans lequel se loge une bague (25) au pourtour carré, quand la manivelle est en position enfoncée ,pour servir de frein à la roue du timon. Le tube guide (4) transmet le mouvement à la roue par le biais d'un cardan (5) est des pignons portés dans la partie compartimenté du boîtier.

## Description

La présente invention a pour objet un dispositif de manoeuvre pour déplacer une caravane ou une remorque et l'entraîner en vue de son stationnement par exemple, lequel dispositif se positionne sur la roue du timon et est actionné manuellement par l'utilisateur sans aucune autre aide particulière.
Actuellement pour manoeuvrer une caravane pour l'accrocher, par exemple, à un véhicule de traction, cela peut se faire avec le système décrit dans le brevet US 3 183 013 ( BROWN ) qui est constitué d'un tube de manipulation placé dans le prolongement de deux roues qui portent l'extrémité avant du timon. Cependant ce brevet ( BROWN ) présente un inconvénient, en ce que ledit tube de manipulation est rigide sur sa longueur et de ce fait interdit une approche aisée vers l'arrière du véhicule tracteur, dans le sens de l'avancement, en outre ce système ne permet pas d'avancer ou de reculer avec une bonne visibilité sur les côtés ou sur l'arrière de la caravane lors de manoeuvres. Enfin le système dudit brevet ( BROWN ) n'est pas conçu pour rester à demeure sur le timon de la remorque comme le sont généralement les roues des timons, et nécessite un remontage lors de chaque manoeuvre.

On connaît également le brevet US- A 5 016 900 ( MC CULLY ) qui concerne un système vertical à crémaillère placé à l'aplomb de la roue du timon, mais ce dernier brevet contraint l'opérateur à se tenir, pour toute manoeuvre, entre la remorque et le véhicule tracteur, supprimant toute visibilité sur les côtés et l'arrière.

L'invention objet des présentes a pour but de remédier à ces inconvénients ; en effet, elle permet de déplacer sans aide une caravane ou toute autre remorque. Le dispositif des présentes est conçu avec une commande latérale, laquelle est articulée et comporte une longueur suffisante pour permettre une visibilité de manoeuvre dans le sens de l'avance ou du recul. Cette visibilité autorise une conduite adéquate de la roue située à l'extrémité du timon pour toutes les manoeuvres d'attelage ou de rangement. En outre, sa conception permet de rester à demeure sur la roue, sans aucune gêne pour les opérations d'attelage ou de décrochage.

La présente invention est un dispositif mécanique qui utilise la petite roue qui se trouve généralement à l'extrémité du timon d une caravane, lequel dispositif comprend un boîtier qui se positionne sur ladite roue par le truchement de son axe rotatif, ce dernier axe rotatif est actionné par un système de démultiplication composé d'axes et de pignons qui sont entraînés au moyen d'une commande oblique composé d'un cardan et d'une manivelle articulée et amovible, laquelle manivelle se positionne, pour la manoeuvre, par son extrémité inférieure de section carrée dans un tube de section carré qui prolonge le cardan. Le tube prolongeant le cordon est maintenu dans un tube guide fixé par sa base sur une face latérale du boîtier. Le tube guide est orienté vers le haut et renferme à sa base le cardan qui transmet le mouvement de la manivelle aux pignons. Le système de démultiplication est juxtaposé à la roue et est placé dans un boîtier qui est porté par le timon au moyen d'un support vertical. La commande est maintenue sur un coté latéral du boîtier et selon un angle approprié vers le haut avec un tube guide amovible.

L'extrémité inférieure de la manivelle est composée d'une tige dont la section carrée est légèrement inférieure au tube prolongeant le cordon de manière à entraîner ce dernier en rotation. La tige de section carrée porte une bague circulaire et immobile pour être maintenu, en rotation , dans l'axe du tube guide. La manivelle se verrouille sur le tube guide au moyen d'une pièce tampon qui est traversée en son centre par une ouverture cylindrique pour le passage de la tige située à l'extrémité de la manivelle.

Pour arrêter la rotation de la roue du timon sans autre frein, la pièce tampon porte dans son prolongement une pièce qui comporte partiellement un évidement carré dans lequel se loge une bague au pourtour carré, quand la manivelle est en position poussée. La bague carrée est montée de façon fixe sur une portion de la tige de la manivelle, et à proximité de la pièce tampon de manière à correspondre au débattement de ladite manivelle.

L'invention est exposée ci-près plus en détail à l'aide de dessins représentant seule ment un mode d'exécution à titre d'exemple non limitatif.

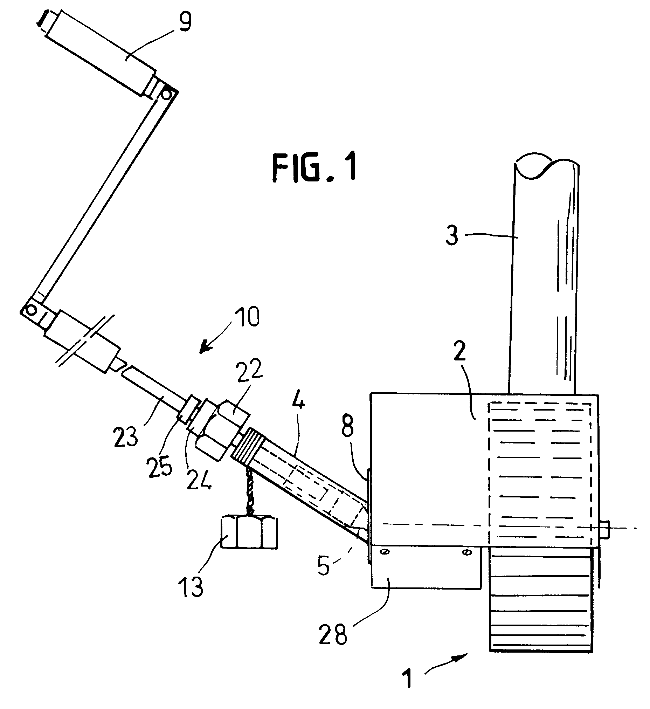

La figure 1 représente en élévation une vue de face, partiellement éclatée du dispositif, avec le moyen de commande.

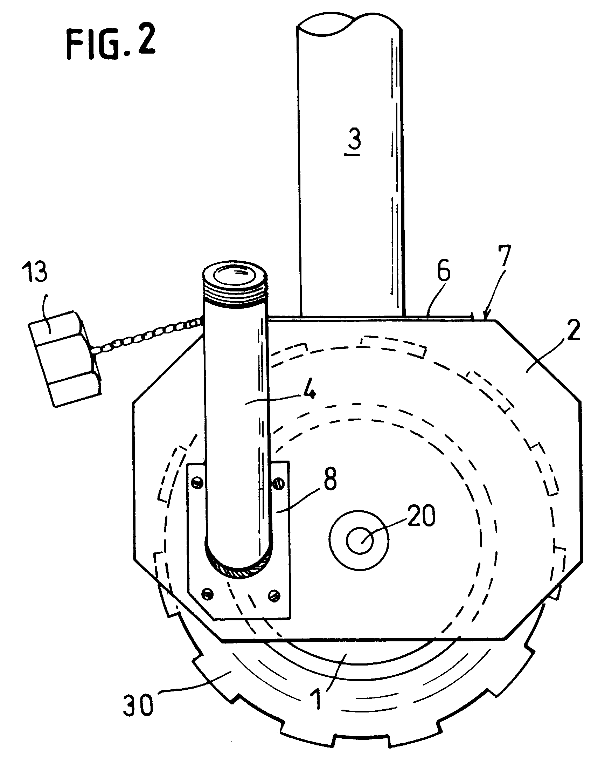

La figure 2 représente partiellement en élévation et à une autre échelle, une vue latérale du dispositif sans le moyen de commande.

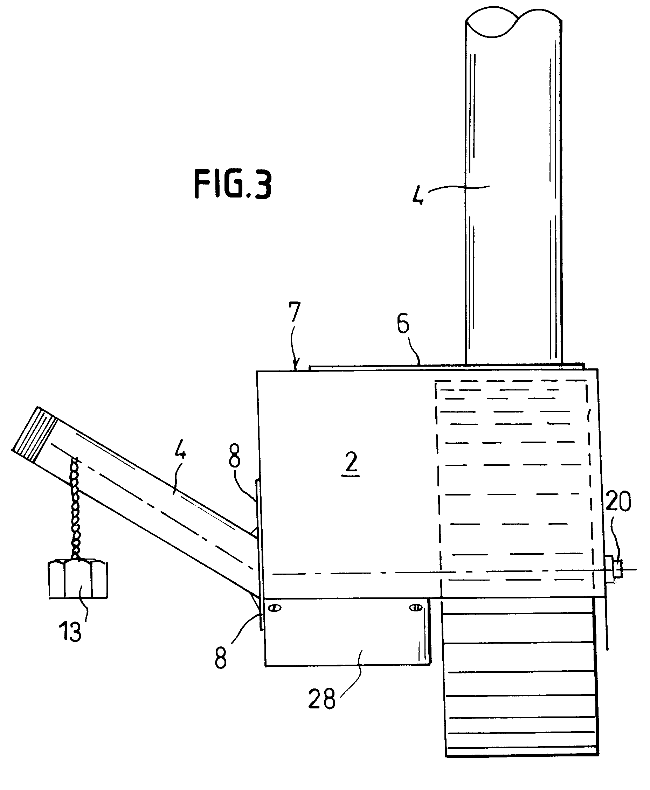

La figure 3 représente partiellement en élévation, une vue de face du dispositif selon la figure n°2.

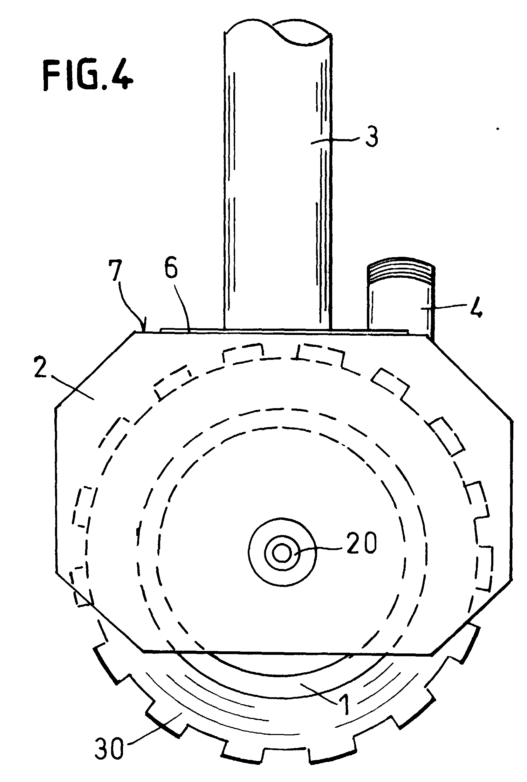

La figure 4 représente partiellement en élévation, l'autre vue latérale du dispositif..

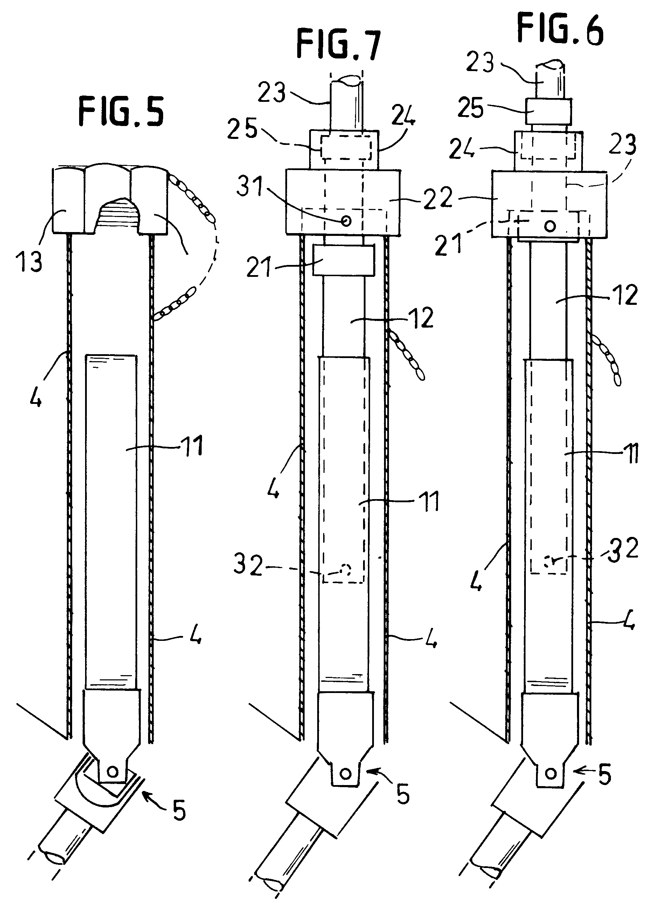

La figure 5 représente succinctement une coupe verticale du tube guide au repos.
La figure 6 représente l'extrémité de la manivelle enclenchée dans le tube carré du cardan en position de manoeuvre.
La figure 7 représente l'extrémité de la manivelle en position enfoncée dons le tube guide pour servir de frein à la roue motrice.

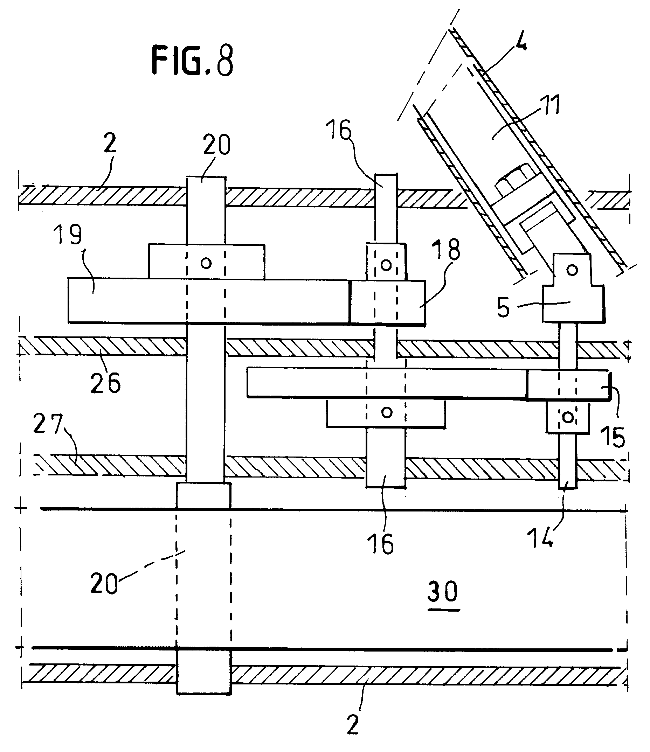

La figure 8 représente succinctement une coupe horizontale du système des pignons.

Le dispositif objet de la présente invention s'adapte sur une petite roue 1 semblable à celle existant généralement à l'extrémité d'un timon d'une caravane, laquelle roue a sa partie supérieure logée dans un boîtier 2 qui est porté par un support vertical 3 et télescopique, ce dernier support étant fixé par sa partie supérieure sur le timon ( non représenté ) au moyen d'une bride ; lequel boîtier 2 porte sur une de ses faces latérales un tube guide 4 qui renferme un cardan 5 qui transmet le mouvement de la commande manuelle à la roue 1 par l'entremise d'un jeu d'axes et de pignons, lesquels pignons sont logés dans le boîtier compartimenté et sont juxtaposés selon un ordre de montage permettant une démultiplication de l'effort manuel. Le support vertical 3 est muni en partie basse d'une platine horizontale 6 qui est fixée sur la face supérieure 7 du boîtier 2 par tout moyen connu, lequel boîtier recouvre la roue au trois quart de sa hauteur.

Le tube guide 4 est fixé sur la paroi extérieure du boîtier au moyen d'une platine 8 et est positionné dans le sens transversal à la roue avec une inclinaison approximative de 35° orienté vers le haut, pour obtenir une bonne hauteur pour la manipulation de la poignée de manoeuvre 9 de la manivelle amovible 10. Le tube guide 4 renferme en sa partie basse le cordon 5 qui se prolonge vers le haut par un tube de section carrée 11, dans lequel tube 11 glisse l'extrémité inférieure de la manivelle 10, lors de la mise en service. L'extrémité inférieure de la manivelle est formée d'une tige 12 de section carrée dont le pourtour est légèrement inférieur au tube 11 du cardan de manière à entraîner ce dernier en rotation. Le tube 11 prolongeant le cardan ne dépasse pas l'extrémité haute du tube guide 4 de façon à permettre l'étanchéité de ce dernier, hors fonctionnement, avec un bouchon 13 vissé sur le pourtour dudit tube guide.
Le tube guide 4 est solidarisé sur la platine 8 au moyen d'une soudure et cette platine est fixée de manière amovible, par exemple avec des vis, sur la paroi latérale du boîtier permettant la visite et le graissage du cardan.

Le cardan 5 transmet le mouvement rotatif donné par la manivelle, à la roue motrice par le bois d'un montage de démultiplication de pignons placés dans le boîtier compartimenté, comme suit : le cordon commande la rotation de l'axe primaire 14 sur lequel est claveté un pignon moteur 15 qui entraîne à la fois, sur l'axe secondaire 16, le pignon mené 17 et un pignon récepteur 18. Ce pignon récepteur 18 entraîne à son tour un autre pignon récepteur 19 claveté sur l'axe tertiaire 20 porteur de la roue motrice 1. Les axes des pignons sont placés parallèlement à l'axe de la roue motrice. Pour l'entraînement, peuvent être prévues plusieurs variantes de démultiplication afin d'adapter l'effort exercer sur la manivelle en fonction du poids de la caravane ou de la remarque. La démultiplication standard retenue est de quinze tours manivelle pour un tour de roue, ceci correspond à une précision dans le positionnement d'arrêt au dessus de la boule d'attelage de 1/60 soit un centimètre par quart de tour de manivelle. Le sens de rotation de la roue motrice correspond à celui de la manivelle.

Le dispositif décrit ci-devant est mis en oeuvre très rapidement avec la manivelle 10 amovible. Cette manivelle de diamètre courant s'emboîte par la tige carré 12 mâle de son extrémité inférieure dans le tube carré femelle 11 prolongeant le cardan contenu dans le tube guide 4. La partie basse de la manivelle est maintenue dans l'axe dudit tube guide avec une bague 21, laquelle bague est arrêtée en position haute par une pièce tampon 22 qui se visse sur le pourtour du tube guide et qui est traversée en son centre par une ouverture cylindrique pour laisser librement le passage et la rotation à une portion de tige 23 de la manivelle. Une fois vissé, la pièce tampon 22 est immobilisée sur l'extrémité du tube guide 4 au moyen d'une vis violon par le biais d'un trou 31 prévu à cet effet.

Sur la face opposée de la pièce tampon 22 et dans son prolongement est solidarisée une pièce carrée 24 de forme cubique qui comporte aussi une ouverture transversale de manière identique à ladite pièce tampon. Cette pièce 24 possède, sur sa face opposée à la pièce tampon, un évidement carré pour recevoir, quand la manivelle est en position poussée, une bague carrée 25. Cette bague 25 est montée à proximité de la pièce tampon sur la tige traversante de la manivelle, et en ce logeant dans ladite pièce tampon 22 arrête la rotation de la manivelle et immobilise la roue en l' absence du frein parking.

La poignée 9 de la manivelle est libre en rotation permettant l'orientation de la roue motrice et le bras de levier de ladite manivelle qui possède une longueur proche de 24 centimètres transmet la force reçue par la poignée 9 à la roue motrice. La roue motrice sous le timon est dotée d'un bandage 30 cranté afin d'assurer une meilleure adhérence sur les sols mous tels que la terre ou l'herbe mouillée.

Le boîtier comporte deux cloisons intérieures 26 et 27 verticale et dans le sens de la longueur pour supporter les axes des pignons ; et un couvercle 28 placé au moyen de vis ,ferme la partie basse des compartiments ; lequel couvercle se démonte aisément donnant accès au système de démultiplication pour autoriser l'entretien et as surer une étanchéité des pignons contre les projections des boues, des gravillons et des brindilles.

Selon une variante complémentaire, l'extrémité carrée de la tige 12 de la manivelle est dotée d'une bille 32 maintenue en saillie par un ressort, afin d'y adapter en bout une douille correspondant au carré de manoeuvre des vérins stabilisateurs des caravanes ,pour en permettre le réglage quelle que soit leur dimension.

L'invention est plus particulièrement destinée pour manoeuvrer les caravanes ou les grandes remarques, mais également peut être employée pour diriger et sortir des petits avions de leur abris.

## Revendications

1. Dispositif de manoeuvre pour déplacer une caravane ou une remarque manuel lement, comprenant un boîtier (2) positionné sur l'axe de la petite roue placée à l'extrémité du timon, lequel boîtier est porté par un support vertical (3) fixé au timon et renferme un système de démultiplication composé d'axes et de pignons qui entraînent la roue (1), caractérisé en ce que l'axe primaire (14) du système de démultiplication est actionné au moyen d'un cardan (5) qui se prolonge vers l'extérieur avec un tube (11) de section carré qui est logé dans un tube guide (4) fixé sur une paroi latérale du boîtier (2), dans lequel tube (11) de section carré glisse l'extrémité inférieure de la manivelle articulée comportant une tige (12) de section carrée, laquelle manivelle se verrouille sur le tube guide (4) au moyen d'une pièce tampon (22) qui est traversée en son centre par une ouverture cylindrique pour le passage de la tige de la manivelle.

2. Dispositif de manoeuvre selon la revendication 1, caractérisé en ce que le tube guide (4) est fixé sur la paroi latérale du boîtier avec une platine amovible et est orienté vers le haut selon un angle proche de 35° de manière à présenter la poignée de la manivelle à hauteur convenable.

3. Dispositif de manoeuvre selon la revendication 1, caractérisé en ce que la tige (12) de l'extrémité inférieure de la manivelle a une section carrée légèrement inférieure à la section du tube (11) de manière à entraîner ce dernier en rotation.

4. Dispositif de manoeuvre selon la revendication 1 ou 3, caractérisé en ce que la tige (12) de section carrée porte une bague circulaire (21) qui est immobilisée sur ladite tige proche de la pièce tampon (22), en position de fonctionnement de la manivelle.

5. Dispositif de manoeuvre selon les revendications 1 et 4, caractérisé en ce que la pièce tampon (22) se visse sur le pourtour du tube guide (4) et est immobilisée au moyen d'une vis violon par le biais d'un trou (31), pour retenir l'extrémité de la manivelle formée par la tige (12) de section carrée.

6. Dispositif de manoeuvre selon les revendication 1 et 5, caractérisé en ce que sur la face opposée de la pièce tampon (22) et dans son prolongement est solidarisée une pièce carrée (24) qui est traversée par une ouverture cylindrique de manière identique à la pièce tampon.

7. Dispositif de manoeuvre selon les revendications 1 et 6, caractérisé en ce que la pièce carrée (24) comporte partiellement un évidement carré dans lequel se loge une bague (25) au pourtour carré, quand la manivelle est en position poussée pour arrêter la rotation de la roue.

8. Dispositif de manoeuvre selon les revendications 1 et 7, caractérisé en ce que la bague (25) est montée de façon fixe sur la portion (23) de la tige de la manivelle, et à proximité de la pièce tampon (22) de manière à correspondre au débattement de ladite manivelle, entre la position de manoeuvre et la position enfoncée de frein.

9. Dispositif de manoeuvre selon la revendication 1 ou 2, caractérisé en ce que le boîtier comprend deux cloisons verticales ( 26 et 27), dans le sens de la longueur, pour supporter les axes des pignons et un couvercle (28) ferme la partie basse des compartiments.

10. Dispositif de manoeuvre selon la revendication 1ou 3, caractérisé en ce que la l'extrémité carrée de la tige (12) de la manivelle, est dotée d'une bille (32) maintenue en saillie par un ressort, pour adapter en bout une douille.
